(19) Europäisches Patentamt
European Patent Office
Office européen des brevets

(11) Publication number: **0 048 538**
**A1**

(12) **EUROPEAN PATENT APPLICATION**

(21) Application number: 81302648.1

(22) Date of filing: 15.06.81

(51) Int. Cl.[3]: C 09 B 29/52
C 09 B 31/14, C 09 B 35/03
D 06 P 3/06

(30) Priority: 11.09.80 GB 8029404

(43) Date of publication of application: 31.03.82 Bulletin 82/13

(84) Designated Contracting States: BE CH DE FR GB IT LI NL

(71) Applicant: IMPERIAL CHEMICAL INDUSTRIES PLC
Imperial Chemical House Millbank
London SW1P 3JF(GB)

(72) Inventor: Harvey, Edwin Dennis
10 Dene Court Heaton Norris
Stockport(GB)

(72) Inventor: Nelson, Anthony John
65 Evesham Road Alkrington
Middleton Manchester M24 1QL(GB)

(74) Representative: Marklow, Raymond Joseph et al,
Imperial Chemical Industries PLC Legal Department: Patents Thames House North Millbank
London SW1P 4QG(GB)

(54) **Azo dyes.**

(57) Water-soluble azo dyes which, in the form of the free acids, contain either one or two groups of the formula:

$$-ZSO_3H$$

wherein Z represents an oxygen atom or a direct link and either one or two residues of the formula:

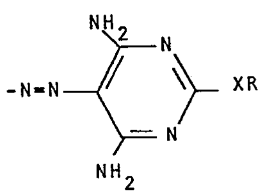

(1)

wherein X represents $-S-$ or $-NR^1$ and each of R and $R^1$ independently, denotes an alkyl radical which may carry a non-aromatic substituent.

These dyes are valuable for colouring polyamides giving yellow shades with good fastness to light and wet treatments.

EP 0 048 538 A1

This invention relates to water-soluble azo dyes and their application to polyamide textile materials.

According to the invention, there are provided water-soluble azo dyes which, in the form of the free acids, contain either one or two groups of the formula:

$$-ZSO_3H$$

wherein Z represents an oxygen atom or a direct link and either one or two residues of the formula:

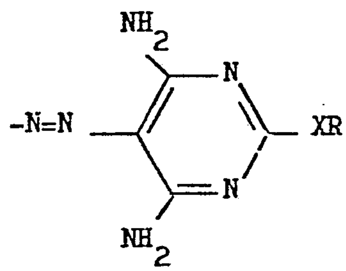

(I)

wherein X represents -S- or $-NR^1$ and each of R and $R^1$, independently, denotes an alkyl radical which may carry a non-aromatic substituent.

The radicals represented by R and $R^1$ are preferably lower alkyl radicals, that is to say alkyl radicals containing from one to four carbon atoms. It is often preferred that R and $R^1$ are unsubstituted or substituted by OH, COOH, COOAlkyl, CN, $OSO_3H$ or $SO_3H$.

One class of water-soluble azo dyes of the invention is the class of monoazo dyes represented by the formula:

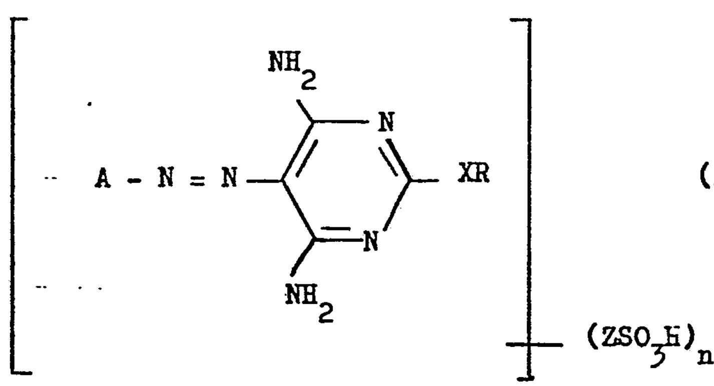

(II)

wherein X, R and Z have the meanings given above, A represents the residue of a diazo component and n is 1 or 2.

The symbol A, representing the residue of a diazo component, thus denotes an optionally substituted aromatic carbocyclic or heterocyclic radical.

The preferred monoazo dyes have the formula:

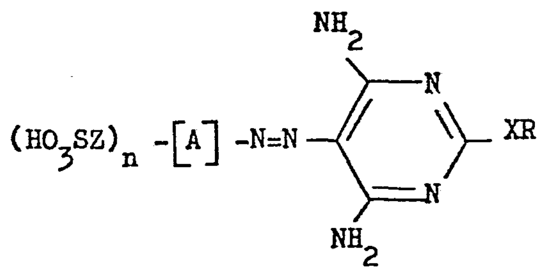

(III)

wherein X,R,Z,A and n have the meanings given above. Those dyes of Formula III which contain a single sulphonic acid group are of greatest value for the coloration of polyamide materials.

The aromatic radical represented by A may belong to the benzene or naphthalene series and, in addition to carrying one or two sulpho or sulphato substituents as in Formula III, it may carry other substituents appropriate to diazo components. Examples of such substituents include chlorine, bromine, hydroxy, cyano, nitro, trifluoromethyl, lower alkyl, lower alkoxy, $-COOR^2$ where $R^2$ represents hydrogen or optionally substituted alkyl or aralkyl, $-CONR^3R^4$ where each of $R^3$ and $R^4$, independently, represents hydrogen or optionally substiuted alkyl or aryl, $-SO_2NR^5R^6$ where each of $R^5$ and $R^6$, independently represents hydrogen or optionally substituted alkyl or aryl, $-SO_2OR^7$ where $R^7$ is optionally substituted aryl, $-SO_2R^8$ where $R^8$ represents optionally substituted alkyl, aralkyl or aryl, $-NHR^9$ where $R^9$ represents alkyl, aralkyl or optionally substituted aryl and $-NHCOR^{10}$ where $R^{10}$ represents alkyl, aryl, alkoxy, aryloxy, amino, alkylamino or arylamino.

As examples of optionally substituted heterocyclic radicals which may be represented by A there may be mentioned 2-thienyl, 2-thiazolyl, 2-benzthiazolyl, 5-imidazolyl and 5-(1,3,4-thiadiazolyl).

Another class of dyes within the scope of the invention is the class of disazo dyes represented by the formula:

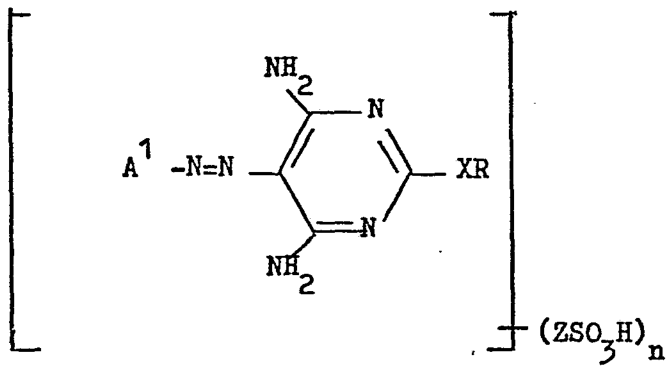

(IV)

wherein X,R,Z and n have the meanings given above and $A^1$ represents a radical of the azobenzene, azonaphthalene or phenylazonaphthalene series which may carry substituents appropriate to diazo components as indicated above.

A further class of dyes of the invention is the class of disazo dyes represented by the formula:

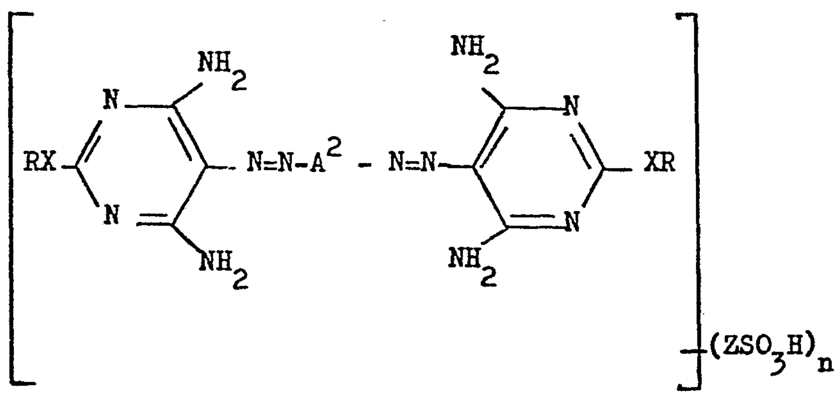

(V)

wherein X,R,Z and n have the meanings given above and $A^2$ represents a divalent aromatic radical. The $-(ZSO_3H)_n$ groups are preferably attached to $A^2$ forming for example a disulphostilbene radical.

The dyes of the invention may be prepared by diazotising an aromatic amine and coupling the resulting diazo compound with a coupling component of the formula:

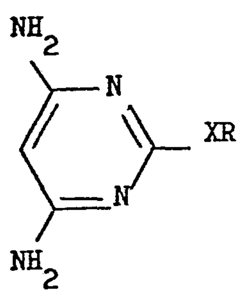

(VI)

wherein X and R have the meanings given above, the amine and the coupling component together containing either one or two sulpho or sulphato groups.

As examples of types of aromatic amine which may be used in making monoazo dyes, there may be mentioned aniline sulphonic acids, toluidine sulphonic acids, anisidine sulphonic acids, chloro (or bromo) aniline (or toluidine) sulphonic acids, dichloro (or dibromo) aniline sulphonic acids, nitroaniline sulphonic acids, naphthylamine sulphonic acids. sulphonic acids based on 4-phenoxysulphonyl aniline, 4-phenylaminosulphonylaniline and 4-benzylsulphonylaniline each of which may carry one or two chlorine substituents, phenoxyaniline sulphonic acid, 2,5-dichloro-4-(sulphoethylaminosulphonyl)aniline, 2,5-dichloro-4-(sulphatoethylaminosulphonyl) aniline, 2,5-dichloro-4-(sulphoethylsulphonyl) aniline, 2-nitro-4'-aminodiphenylamine-4-sulphonic acid, 2-aminothiazole sulphonic acids, 2-aminobenzthiazole sulphonic acids and 2-amino-1,3,4-thiazole-5-sulphonic acid.

Examples of amines which may be used in making disazo dyes include 4'-aminoazobenzene-4-sulphonic acid and 4,4'-diaminostilbene-2,2'-disulphonic acid.

Examples of coupling components which may be used in making the dyes of the invention include 2-ethylthio-4,6-diaminopyrimidine and 2-diethylamino-4,6-diaminopyrimidine.

The coupling reactions leading to the formation of the dyes of the invention may be performed using conditions that have been fully described in the prior art for such reactions. Similarly, the dyes may be isolated by known methods and, as in the case of other dyes containing sulphonic acid groups, it is often convenient to isolate and use the dyes in the form of their water-soluble salts, particularly their alkali metal or ammonium salts and especially sodium salts. It is to be understood that the invention relates to both the free acids and their salts.

The coupling components of formula (VI) may be obtained by known methods. For example when X is $-NR^1$ they may be obtained by reaction of malonitrile with a dialkylguanidine salt or when X is S by the reaction of malonitrile with thiourea followed by reaction with an alkyl halide.

An alternative process for manufacturing the dyes of the invention in which X is $-NR^1$ comprises diazotising an aromatic amine and reacting the resulting diazo compound with malonitrile followed by reaction with a dialkyl guanidine salt.

This alternative process will often give enhanced yields compared with the first process. Typical conditions for the reaction between the diazotised aromatic amine are at 0-5°C in aqueous medium at mildly acid pH e.g. 4.0. The product of this first stage is isolated as an insoluble solid by strong acidification. The second stage i.e. reaction with dialkyl guanidine salt is typically carried out by suspending the first stage product in an alcohol e.g. methanol containing dissolved sodium, adding dialkyl guanidine salt and refluxing. The resulting dyestuff may be isolated by pouring the reaction mixture into water and filtering.

The dyes of the invention are suitable for applying to polyamide textile materials such as wool and silk but especially to synthetic polyamide textile materials, for example nylon 66, nylon 6 and nylon 11, using any of the general methods known for the application of acid dyes to such materials. The dyes provide yellow shades having a high degree of fastness to wet treatments and to light.

The preferred dyes are those in which X represents sulphur.

The invention is illustrated but not limited by the following Examples in which all parts are by weight.

Example 1

5 Parts of concentrated hydrochloric acid are added to a solution of 2.64 parts of the sodium salt of 2,5-dichlorosulphanilic acid in 100 parts of water at 20°C. The resulting suspension is cooled to 0-5°C and treated with 0.828 parts of sodium nitrite in 6 parts of water. After stirring at 0-5°C for a further 0.5 hours, excess nitrous acid is decomposed by the addition of 10% aqueous sulphamic acid solution. The diazonium salt suspension is added to a stirred solution of 1.7 parts of 4,6-diamino-2-thioethylpyrimidine in 100 parts of acetone at 0-5°C. Saturated sodium acetate solution is added to adjust the pH to 4-5; on completion of coupling the pH is raised to 7-8 by the addition of 8% sodium hydroxide solution. After stirring for 1 hour further, the product is filtered off and dried. 4.55 g of a yellow powder of the formula:

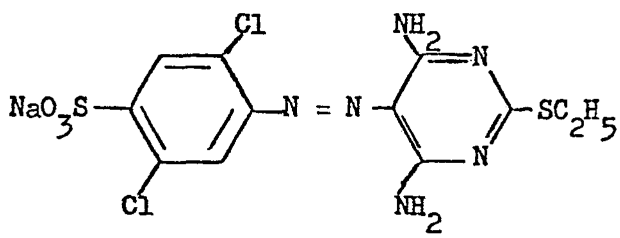

which dyes polyamide a bright greenish yellow shade are obtained.

Example 2

5 Parts of concentrated hydrochloric acid are added to a solution of 2.64 parts of the sodium salt of 2,5-dichlorosulphanilic acid in 100 parts of water at 20°C. The resulting suspension is cooled to 0-5°C and treated with 0.828 parts of sodium nitrite in 6 parts of water. After stirring at 0-5°C for a further 0.5 hours, excess nitrous acid is decomposed by the addition of 10% aqueous

sulphamic acid solution. The diazonium salt suspension is added to a stirred solution of 1.81 parts of 4,6-diamino-2-diethylamino pyrimidine in 100 parts of acetone at 0-5°C. Saturated sodium acetate solution is added to adjust the pH to 4-5; on completion of coupling the pH is raised to 7-8 by the addition of 8% sodium hydroxide solution. After stirring for 1 hour further, the product is filtered off and dried. 4.2 g of a yellow powder of the formula:

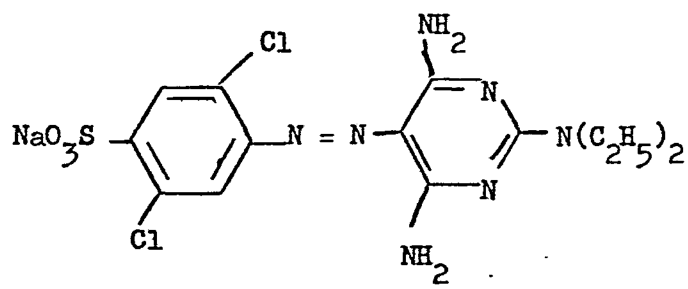

which dyes polyamide a bright greenish yellow shade are obtained.

Table 1 gives further Examples of dyes of the invention which are obtained by a process similar to that described in Examples 1 and 2. In the Table, the dyes are identified in columns 2 and 3 respectively by the diazo component (which is used in the form of the sodium salt) and the substituent -XR present in the coupling component. The fourth column gives the shade obtained when the dyes are applied in conventional manner to synthetic polyamide textile materials.

Table 1

| Ex. | Diazo component | -XR | Shade |
|---|---|---|---|
| 3 | 2,5-dichlorosulphanilic acid | $-N(CH_3)_2$ | greenish-yellow |
| 4 | " | $-SCH_3$ | " |
| 5 | " | $-SCH_2COONa$ | " |
| 6 | " | $-SCH_2CH_2OH$ | " |
| 7 | " | $-SCH_2CH(OH)CH_2CH_3$ | " |
| 8 | " | $-SCH_2CH_2CN$ | " |
| 9 | " | $-SCH_2CH_2CO_2C_2H_5$ | " |
| 10 | 3-chloro orthanilic acid | $-SC_2H_5$ | " |
| 11 | 4-chloro orthanilic acid | " | " |
| 12 | 5-chloro orthanilic acid | " | " |
| 13 | 6-chloro orthanilic acid | " | " |
| 14 | 2-chlorometanilic acid | " | " |
| 15 | 4-chlorometanilic acid | " | " |
| 16 | 5-chlorometanilic acid | " | " |
| 17 | 6-chlorometanilic acid | " | " |
| 18 | 2-chlorosulphanilic acid | " | " |
| 19 | 3-chlorosulphanilic acid | " | " |
| 20 | 3,5-dichlorosulphanilic acid | " | " |
| 21 | 2,3-dichlorosulphanilic acid | " | " |
| 22 | 5,6-dichloro orthanilic acid | " | " |
| 23 | 4,6-dichlorometanilic acid | " | " |
| 24 | 3,4-dichloro orthanilic acid | " | " |
| 25 | 5,6-dichlorometanilic acid | " | " |

| Ex. | Diazo component | -XR | Shade |
|---|---|---|---|
| 26 | 4,5-dichloro orthanilic acid | $-SC_2H_5$ | greenish-yellow |
| 27 | 3,5-dichloro orthanilic acid | " | " |
| 28 | 4-phenoxysulphonylaniline-4'-sulphonic acid | " | " |
| 29 | 2-chloro-4-phenoxysulphonyl-aniline-4'-sulphonic acid | " | yellow |
| 30 | 3-chloro-4-phenoxysulphonyl-aniline-4'-sulphonic acid | " | " |
| 31 | 2,5-dichloro-4-phenoxy-sulphonylaniline-4'-sulphonic acid | " | " |
| 32 | 4-phenylaminosulphonyl-aniline-4'-sulphonic acid | " | greenish-yellow |
| 33 | 2,5-dichloro-4-phenylamino-sulphonylaniline-4'-sulphonic acid | " | yellow |
| 34 | 4-(4'-methylphenylamino-sulphonyl)aniline-2'-sulphonic acid | " | greenish yellow |
| 35 | N-(4-amino-2,5-dichloro-phenylsulphonyl)-2-amino-ethanesulphonic acid | " | yellow |
| 36 | 2-chloro-4-phenylamino-sulphonylaniline-4'-sulphonic acid | " | " |
| 37 | 3-chloro-4-phenylamino-sulphonylaniline-4'-sulphonic acid | " | " |
| 38 | 2-amino-1,3-benzthiazole-5-sulphonic acid | " | reddish-yellow |
| 39 | 2,6-dichlorosulphanilic acid | " | greenish-yellow |
| 40 | 4,5-dichlorometanilic acid | " | " |
| 41 | 4,6-dichloro orthanilic acid | " | " |

| Ex. | Diazo Component | -XR | Shade |
|---|---|---|---|
| 42 | 2,5-dichlorosulphanilic acid | $-S.CH_2CO_2.C_2H_5$ | greenish-yellow |
| 43 | " | $-S.CH_2CH_2CH_2CH_3$ | " |
| 44 | " | $-S.CH(CH_3)_2$ | " |
| 45 | " | $-S.CH_2CH_2CH_3$ | " |
| 46 | orthanilic acid | $-S.C_2H_5$ | " |
| 47 | metanilic acid | " | " |
| 48 | sulphanilic acid | " | " |
| 49 | N-(4-amino-3-chlorophenyl sulphonyl)-2-aminoethane sulphonic acid | " | " |
| 50 | N-(4-amino-2-chlorophenyl sulphonyl)-2-aminoethane sulphonic acid | " | " |
| 51 | N-(4-aminophenylsulphonyl)-2-aminoethane sulphonic acid | " | " |
| 52 | 2,5-dichloroaniline | $-S.CH_2CH_2.SO_3H$ | " |
| 53 | 2-chloroaniline | " | " |
| 54 | 4-ethylaminosulphonyl-2,5-dichloroaniline | " | " |
| 55 | 2-methylaniline-4-sulphonic acid | $-SC_2H_5$ | " |
| 56 | 2-ethylaniline-4-sulphonic acid | " | " |
| 57 | 2-methoxyaniline-4-sulphonic acid | " | " |
| 58 | 2-ethoxyaniline-4-sulphonic acid | " | " |
| 59 | 2-cyanoaniline-4-sulphonic acid | " | " |
| 60 | 2-trifluoromethylaniline-4-sulphonic acid | " | " |

| Ex. | Diazo Component | -XR | Shade |
|---|---|---|---|
| 61 | 2-nitroaniline-4-sulphonic acid | $-SC_2H_5$ | greenish-yellow |
| 62 | 2-methoxycarbonylaniline-4-sulphonic acid | " | " |
| 63 | 2-(2-hydroethylcarbonyl) aniline-4-sulphonic acid | " | " |
| 64 | 2-aminocarbonylaniline-4-sulphonic acid | " | " |
| 65 | 2-N-methylaminocarbonyl aniline-4-sulphonic acid | " | " |
| 66 | 2,5-dichlorosulphanilic acid | $N(CH_2CH_2CH_2CH_3)_2$ | |
| 67 | " | $N(CH_2CH_2OH)_2$ | " |

Example 68

This Example describes the alternative process employed to produce the dyestuff of Example 2.

132 parts of 2,5-dichlorosulphanilic acid sodium salt in 500 parts hot water is treated with 875 parts 2N HCl; the resulting precipitate is cooled to 0-5° and 260 parts 2N $NaNO_2$ solution added. After 0.5 hours, excess nitrite is decomposed, and the resulting suspension added to a solution of 33 parts malonitrile in 500 parts water, with adjustment to pH 4 with sodium acetate trihydrate. The mixture, initially at 0-5° is allowed to warm to room temperature overnight, taken to pH 0.5 with concentrated HCl and the resulting solid filtered. Re-suspension in 74 OP EtOH, filtration and drying gives 149.2 parts of a pale yellow powder believed to have the formula:

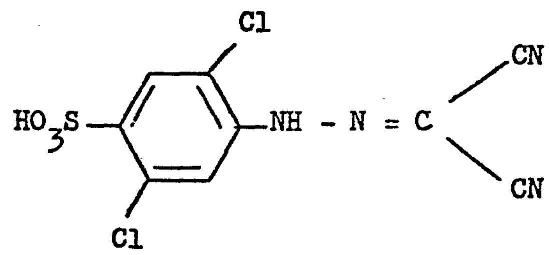

35.5 parts of the product of the above reaction is added to a solution of 6.9 parts sodium in 300 parts methanol and 16.4 parts of diethyl guanidine sulphate added. The mixture is refluxed for 24 hours, a further 16.4 parts of diethyl guanidine sulphate added and reflux continued for a total of 55 hours. The reaction mixture is drowned in water and the deposited yellow solid filtered off and dried to give 41.5 parts of a product essentially similar to the dye obtained in Example 2.

## CLAIMS

1. Water-soluble azo dyes which, in the form of the free acids, contain either one or two groups of the formula:

$$- ZSO_3H$$

wherein Z represents an oxygen atom or a direct link and either one or two residues of the formula:

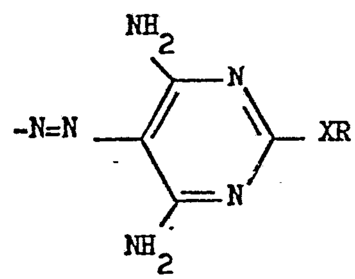

(I)

wherein X represents -S- or $-NR^1$ and each of R and $R^1$, independently, denotes an alkyl radical which may carry a non-aromatic substituent.

2. Dyes as claimed in claim 1 in which R and $R^1$ are $C_{1-4}$ alkyl radicals which are optionally substituted by OH, COOH, COOAlkyl, CN, $OSO_3H$ or $SO_3H$.

3. Dyes as claimed in claims 1 or 2 being monoazo dyes represented by the formula:

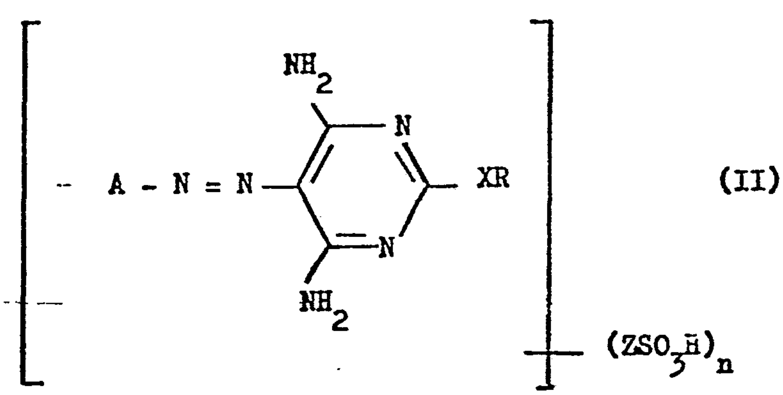

(II)

wherein X, R and Z have the meanings given in claims 1 or 2, A represents the residue of a diazo component and n is 1 or 2.

4. Dyes as claimed in claim 3 having the formula:

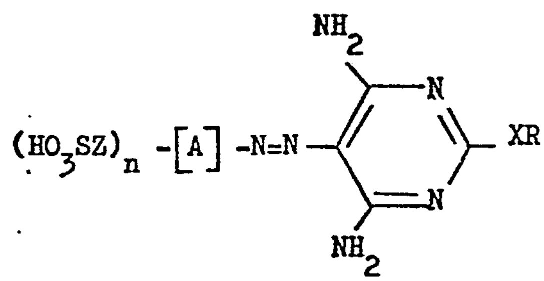

(III)

wherein X, R, Z, A and n have the meanings given in claim 3.

5. Dyes as claimed in claims 3 or 4 in which A is of the benzene or naphthalene series.

6. Dyes as claimed in claim 1 being disazo dyes represented by the formula:

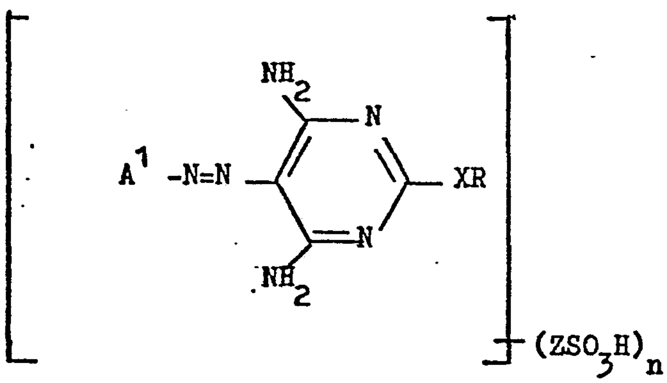

(IV)

wherein X, R and Z have the meanings given in claim 1, n is 1 or 2 and $A^1$ represents an optionally substituted radical of the azobenzene, azonaphthalene or phenyl azonaphthalene series.

7. Dyes as claimed in claim 1 being disazo dyes represented by the formula:

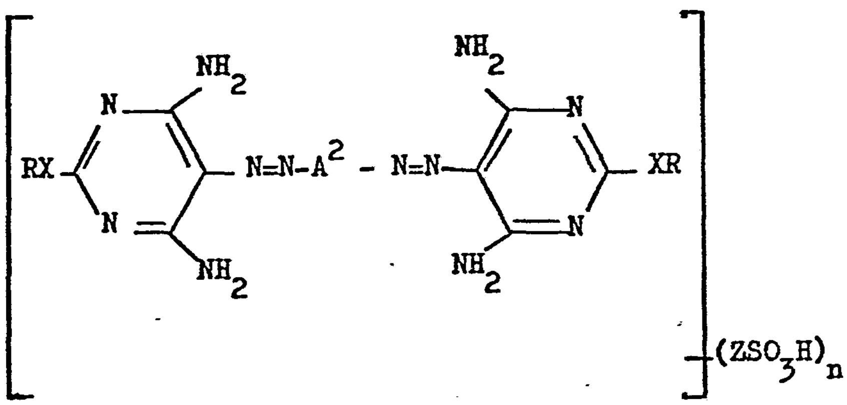

(V)

wherein X, R and Z have the meanings given in claim 1, n is 1 or 2 and $A^2$ represents a divalent aromatic radical.

8. A process for the manufacture of dyes as claimed in claim 1 which comprises diazotising an aromatic amine and coupling the resulting diazo compound with a coupling component of the formula:

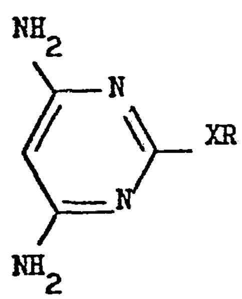

wherein X and R have the meanings given in claim 1, the amine and the coupling component together containing either one or two sulpho or sulphato groups.

9. A process for the manufacture of dyes as claimed in claim 1 in which X is $-NR^1$ which comprises diazotising an aromatic amine and reacting the resulting diazo compound with malonitrile followed by reaction with a dialkyl guanidine salt.

10. A process for the colouration of polyamide textile materials which comprises treating the material with a dyestuff as claimed in claim 1.

RJM/BH
9.6.81.

0048538

European Patent Office

# EUROPEAN SEARCH REPORT

Application number
EP 81 30 2648

## DOCUMENTS CONSIDERED TO BE RELEVANT

| Category | Citation of document with indication, where appropriate, of relevant passages | Relevant to claim |
|---|---|---|
| A | GB - A - 837 338 (TAKEDA PHARMACEUTICAL)<br>* claims 1-7 *<br>--- | 1 |
| A | US - A - 4 145 341 (J. DEHNERT)<br>* claims 1-5 *<br>& GB - A - 1 455 194 (BASF)<br>--- | 1 |
| A | CH - A - 480 410 (GEIGY)<br>* claim 1; page 1, column 1, lines 19-21 *<br>& GB - A - 1 217 272<br>--- | 1 |
| A | FR - E - 94 282 (GEIGY)<br>* abstract *<br>& GB - A - 1 223 489<br>-------- | 1 |

CLASSIFICATION OF THE APPLICATION (Int. Cl.3)

C 09 B 29/52
C 09 B 31/14
C 09 B 35/03
D 06 P 3/06

TECHNICAL FIELDS SEARCHED (Int. Cl.3)

C 09 B 29/00
29/36
29/52
31/00
31/02
31/14
35/00
35/027
35/03
35/039
35/04-
35/10
35/21-
35/34

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 16.12.1981 | DELANGHE |

EPO Form 1503.1 06.78